# EUROPÄISCHE PATENTSCHRIFT

(11) **EP 2 667 471 B1**
(45) Veröffentlichungstag und Bekanntmachung des Hinweises auf die Patenterteilung: **27.02.2019**
(21) Anmeldenummer: 13002482.1
(22) Anmeldetag: 10.05.2013
(51) Int. Cl.: H02P 1/16, H02H 9/00

(54) **SCHALTUNGSANORDNUNG ZUM ANSTEUERN EINES ELEKTRISCHEN VERBRAUCHERS**
Circuit configuration for controlling an electricity consumer
Agencement de commutation destiné à la commande d'un consommateur électrique

(30) Priorität: 18.05.2012 DE 102012009883
(43) Veröffentlichungstag der Anmeldung: 27.11.2013
(73) Patentinhaber: Diehl AKO Stiftung & Co. KG, 88239 Wangen (DE)
(72) Erfinder: Rieser, Martin, 90469 Nürnberg (DE); Frisch, Rainer, 88239 Wangen (DE); Florea, Radu Liviu, 91224 Pommelsbrunn (DE); Rodler, Joachim, 91245 Simmelsdorf (DE)
(74) Vertreter: Diehl Patentabteilung

(56) Entgegenhaltungen:
- DE-A1- 4 032 789
- DE-A1-102006 007 266
- JP-A- S58 124 080
- JP-A- 2007 184 997

## Beschreibung

Die vorliegende Erfindung betrifft eine Schaltungsanordnung zum Ansteuern eines elektrischen Verbrauchers, insbesondere eines Elektromotors eines Haushaltsgerätes.

Frequenzumrichter zur Motoransteuerung weisen typischerweise einen Wechselstromeingang, einen an diesen Wechselstromeingang angeschlossenen Gleichrichter, ein an diesen Gleichrichter angeschlossenes Leistungsmodul, an welches der Motor anschließbar ist, eine Steuervorrichtung zum Ansteuern des Leistungsmoduls und einen zwischen dem Wechselstromeingang und dem Gleichrichter angeordneten Einschaltstrombegrenzer zum Begrenzen des Einschaltstroms auf. Aus der JP 2007184997 ist eine derartige Schaltungsanordnung bekannt. Zur Überwachung der Funktionsfähigkeit der Steuervorrichtung ist herkömmlicherweise ein Watchdog vorgesehen, dessen Ausgangssignal an einem Freigabepin des Leistungsmoduls anliegt.

Der Watchdog wird von einer funktionsfähigen Steuervorrichtung mit einem dynamischen Signal angesteuert. In diesem Fall gibt der Watchdog das Leistungsmodul frei, sodass der Motor angesteuert werden kann. Wird der Watchdog dagegen mit einem statischen Signal angesteuert, zum Beispiel weil die Steuervorrichtung nicht mehr funktioniert, so wird auch das Leistungsmodul sicher abgeschaltet.

Die DE 10 2006 007 266 A1 beschreibt einen Starter für einen Elektromotor, dessen Wicklungen direkt am Netz anliegen, mit einem PTC-Widerstand, der das Netz und einen Zuschaltkontakt vor einem überhöhten Netzeinschaltstrom schützt.

Der Erfindung liegt die Aufgabe zugrunde, eine verbesserte Schaltungsanordnung zum Ansteuern eines elektrischen Verbrauchers zu schaffen, welche bei möglichst einfachem Aufbau eine effektive Sicherheitsschaltung bei einer Fehlfunktion der Steuervorrichtung vorsieht.

Diese Aufgabe wird gelöst durch eine Schaltungsanordnung zum Ansteuern eines elektrischen Verbrauchers mit den Merkmalen des Anspruchs 1. Besonders bevorzugte Ausgestaltungen und Weiterbildungen der Erfindung sind Gegenstand der abhängigen Ansprüche.

Die Schaltungsanordnung zum Ansteuern eines elektrischen Verbrauchers weist einen Wechselstromeingang; einen an diesen Wechselstromeingang angeschlossenen Gleichrichter; einen an diesen Gleichrichter angeschlossenen Wechselrichter mit mehreren Schaltelementen; einen Wechselstromausgang des Wechselrichters, an welchen wenigstens ein elektrischer Verbraucher anschließbar ist; eine Steuervorrichtung zum Ansteuern der mehreren Schaltelemente des Wechselrichters; und einen zwischen dem Wechselstromeingang und dem Gleichrichter angeordneten Einschaltstrombegrenzer auf. Der Einschaltstrombegrenzer weist wenigstens einen Kaltleiter auf. Zudem ist dem Einschaltstrombegrenzer eine Schalteinrichtung parallel geschaltet, welche nach einem Einschalt- oder Anlaufvorgang von der Steuervorrichtung eingeschaltet wird, um den Einschaltstrombegrenzer zu überbrücken, und bei einer Fehlfunktion der Steuervorrichtung ausgeschaltet wird.

Der Einschaltstrombegrenzer der erfindungsgemäßen Schaltungsanordnung weist wenigstens einen Kaltleiter auf bzw. ist vorzugsweise aus (genau) einem Kaltleiter aufgebaut. Dies stellt einen besonders einfachen Aufbau des Einschaltstrombegrenzers dar, wodurch auch der Aufbau der gesamten Schaltungsanordnung vereinfacht ist.

Ein Kaltleiter ist in diesem Zusammenhang ein Widerstand mit einem positiven Temperaturkoeffizienten (PTC), der bei tiefen Temperaturen leitet und bei steigender Temperatur hochohmiger wird. Der elektrische Widerstand des Kaltleiters kann dabei - insbesondere je nach verwendetem Material - mit steigender Temperatur linear oder nichtlinear ansteigen.

Diesem Einschaltstrombegrenzer ist gemäß der Erfindung eine Schalteinrichtung parallel geschaltet, welche nach einem Einschalt- oder Anlaufvorgang von der Steuervorrichtung eingeschaltet wird, um den Einschaltstrombegrenzer zu überbrücken, und bei einer Fehlfunktion der Steuervorrichtung ausgeschaltet wird. Im Gegensatz zu herkömmlichen Schaltungsanordnungen wirkt eine fehlerhafte Steuervorrichtung nicht auf einen Freigabepin des Wechselrichters bzw. Leistungsmoduls, sondern auf die in der Regel ohnehin vorhandene Schalteinrichtung, welche somit auch die Sicherheitsfunktion realisiert. Auf diese Weise kann der Wechselrichter (bzw. das Leistungsmodul) durch Wegfall des Freigabepins einfacher ausgestaltet werden.

Bei einer Fehlfunktion der Steuervorrichtung wird also die Schalteinrichtung ausgeschaltet, sodass die gesamte, am Wechselstromeingang aufgenommene Leistung der Schaltungsanordnung über den Einschaltstrombegrenzer fließt. Da dieser einen Kaltleiter aufweist bzw. aus einem solchen besteht, steigt dessen ohmscher Widerstand an und begrenzt somit die Leistungsaufnahme der Schaltungsanordnung. Es kann dann nicht mehr genügend Energie zum Wechselrichter und zum angeschlossenen Verbraucher gelangen, sodass diese trotz Fehlfunktion der Steuervorrichtung nicht überhitzen können.

Die Steuervorrichtung ist in diesem Zusammenhang jede Art von Vorrichtung, die geeignet ist, die Schaltelemente oder Leistungsschaltelemente des Wechselrichters anzusteuern. Vorzugsweise ist die Steuervorrichtung durch einen Mikrocontroller realisiert.

In einer bevorzugten Ausgestaltung der Erfindung wird die Schalteinrichtung über einen Watchdog angesteuert, welcher die Funktionsfähigkeit der Steuervorrichtung überwacht. Vorzugsweise sendet die Steuervorrichtung an den Watchdog ein dynamisches Signal, anhand dessen der Watchdog die Funktionsfähigkeit der Steuervorrichtung feststellt. Empfängt der Watchdog in diesem Fall von der Steuervorrichtung dagegen ein statisches Signal, so kann er auf eine Fehlfunktion der Steuervorrichtung schließen.

In einer bevorzugten Ausgestaltung der Erfindung weist die Schalteinrichtung ein Relais auf.

Die Schaltungsanordnung der Erfindung ist für ein- oder mehrphasige Wechselrichter einsetzbar.

Die Schaltungsanordnung der Erfindung ist zum Ansteuern von elektrischen Verbrauchern, insbesondere von Elektromotoren in vorteilhafter Weise einsetzbar. Besonders bevorzugt ist die Schaltungsanordnung der Erfindung zum Ansteuern von Elektromotoren von Haushaltsgeräten wie zum Beispiel Waschmaschinen, Wäschetrockner, Spülmaschinen und dergleichen einsetzbar.

Die Schaltung zur Einschaltstrombegrenzung der erfindungsgemäßen Schaltungsanordnung ist auch als externe Sicherheitsfunktion zur Absicherung einer Steuervorrichtung nutzbar.

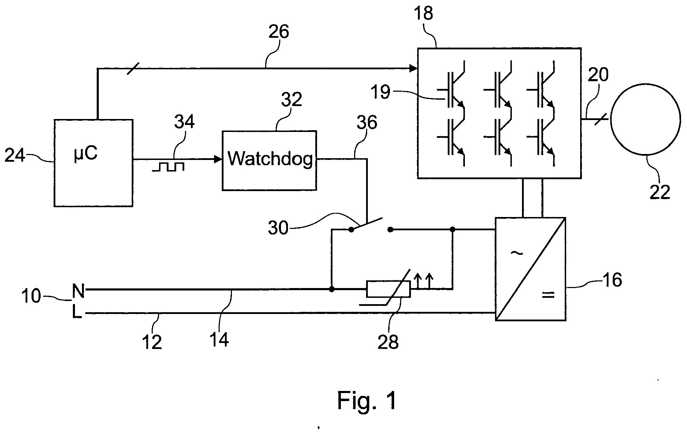

Obige sowie weitere Merkmale und Vorteile der Erfindung werden aus der nachfolgenden Beschreibung eines bevorzugten, nicht-einschränkenden Ausführungsbeispiels unter Bezugnahme auf die beiliegende Zeichnung besser verständlich. Darin zeigt die einzige Figur 1 ein schematisches Blockschaltbild einer Schaltungsanordnung gemäß einem bevorzugten Ausführungsbeispiel der vorliegenden Erfindung.

Die in Figur 1 dargestellte Schaltungsanordnung weist einen Wechselstromeingang 10 (L, N) auf, an den über zwei Zuleitungen 12 und 14 ein Gleichrichter 16 angeschlossen ist. Dieser Gleichrichter 16 speist einen Wechselrichter 18 mit mehreren Schaltelementen 19, an dessen Wechselstromausgang 20 ein elektrischer Verbraucher 22, beispielsweise ein Elektromotor eines Haushaltsgerätes anschließbar ist. Der Wechselrichter 18 bildet das Leistungsmodul der Schaltungsanordnung; er kann als ein- oder mehrphasiger Wechselrichter ausgestaltet sein.

Die Schaltelemente 19 des Wechselrichters 18 werden von einem Mikrocontroller (Steuervorrichtung der Erfindung) 24 über eine Signalverbindung 26 angesteuert.

In der einen Zuleitung 14 des Gleichrichters 16 ist ein Kaltleiter (PTC) als Einschaltstrombegrenzer 28 angeordnet. Parallel zu diesem Kaltleiter 28 ist eine Schalteinrichtung in Form eines Relais 30 geschaltet.

Die Funktionsfähigkeit des Mikrocontrollers 24 wird von einem Watchdog bzw. einer Watchdog-Schaltung 32 überwacht. Über eine Signalverbindung 34 empfängt der Watchdog 32 von der funktionsfähigen Steuervorrichtung 24 ein dynamisches Signal bzw. von einer fehlerhaften oder nicht funktionsfähigen Steuervorrichtung 24 ein statisches Signal. In Abhängigkeit von dem von der Steuervorrichtung 24 empfangenen Signal steuert der Watchdog 32 über eine weitere Signalverbindung 36 das Relais 30 an. Die Abfrage des dynamischen Signals vom Mikrocontroller 24 erfolgt vom Watchdog 32 kontinuierlich oder periodisch.

Die Funktionsweise dieser Schaltungsanordnung bzw. ihrer Sicherheitsfunktion ist wie folgt.

Der Gleichrichter 16 wird entweder über den Kaltleiter 28 oder über das Relais 30 mit dem Wechselstromeingang 10 und damit mit der Netzspannung verbunden. Wenn der Zwischenkreiskondensator des Gleichrichters 16 über den Kaltleiter 28 geladen ist und der interne Selbsttest (einmalig oder periodisch) des Mikrocontrollers 24 keine Fehler erkannt hat, wird das Relais 30 bestromt, d.h. eingeschaltet, um den Kaltleiter 28 zu überbrücken. Der Watchdog 32 stellt dabei sicher, dass das Relais 30 nur dann eingeschaltet wird, wenn auf der Signalverbindung 34 ein dynamisches Signal vom Mikrocontroller 24 erzeugt wird.

Hat der Mikrocontroller 24 oder das Leistungsmodul 18 eine Fehlfunktion, besteht grundsätzlich die Gefahr, dass das Leistungsmodul 18 fehlerhaft angesteuert wird oder einen fehlerhaften Stromfluss ermöglicht. Dadurch kann sich der angeschlossene Elektromotor 22 stark erhitzen, möglicherweise bis hin zur Entzündung.

In einem solchen Fehlerfall ist jedoch sichergestellt, dass der Mikrocontroller 24 auf der Signalverbindung 34 nicht das erforderliche dynamische Signal erzeugt, sondern ein statisches Signal. Der Watchdog 32 schaltet dann bei Empfang des statischen Signals über die Signalverbindung 36 das Relais 30 aus.

Bei ausgeschaltetem Relais 30 fließt die gesamte, am Wechselstromeingang 10 vom Netz aufgenommene Leistung über den Kaltleiter 28, der sich dadurch erwärmt. Die Erwärmung des Kaltleiters 28 bewirkt wiederum eine Erhöhung seines ohmschen Widerstandes, wodurch die Leistungsaufnahme des Systems begrenzt wird. Als Ergebnis kann nicht mehr genügend Energie zum Motor 22 gelangen, wodurch dieser keine mechanische Arbeit mehr verrichten und damit nicht mehr überhitzen kann.

## Patentansprüche

1. Schaltungsanordnung zum Ansteuern eines elektrischen Verbrauchers, mit
einem Wechselstromeingang (10);
einem an diesem Wechselstromeingang (10) angeschlossenen Gleichrichter (16);
einem an diesen Gleichrichter (16) angeschlossenen Wechselrichter (18) mit mehreren Schaltelementen (19);
einem Wechselstromausgang (20) des Wechselrichters (18), an welchen wenigstens ein elektrischer Verbraucher (22) anschließbar ist;
einer Steuervorrichtung (24) zum Ansteuern der mehreren Schaltelemente (19) des Wechselrichters (18); einem zwischen dem Wechselstromeingang (10) und dem Gleichrichter (16) angeordneten Einschaltstrombegrenzer (28); und einer dem Einschaltstrombegrenzer (28) parallelgeschalteten Schalteinrichtung (30), welche nach einem Einschalt- oder Anlaufvorgang von der Steuervorrichtung (24) eingeschaltet wird, um den Einschaltstrombegrenzer zu überbrücken, **dadurch gekennzeichnet, dass**
der Einschaltstrombegrenzer (28) wenigstens einen Kaltleiter aufweist; und weiter **gekennzeichnet durch** ein Mittel (32), das so ausgestaltet ist, daß es bei einer Fehlfunktion der Steuervorrichtung (24) die Schalteinrichtung (30) in Abhängigkeit von einem von der Steuervorrichtung (24) empfangenem Signal (36) ausschaltet.

2. Schaltungsanordnung nach Anspruch 1,
**dadurch gekennzeichnet, dass**
der Einschaltstrombegrenzer (28) aus einem Kaltleiter aufgebaut ist.

3. Schaltungsanordnung nach Anspruch 1 oder 2,
**dadurch gekennzeichnet, dass**
die Schalteinrichtung (30) über einen Watchdog (32) angesteuert wird, welcher die Funktionsfähigkeit der Steuervorrichtung (24) überwacht.

4. Schaltungsanordnung nach einem der vorhergehenden Ansprüche,
**dadurch gekennzeichnet, dass**
die Schalteinrichtung (30) ein Relais aufweist.

5. Schaltungsanordnung nach einem der vorhergehenden Ansprüche,
**dadurch gekennzeichnet, dass**
der Wechselrichter (18) ein ein- oder mehrphasiger Wechselrichter ist.

## Claims

1. Circuit arrangement for actuating an electrical load, having
an AC input (10);
a rectifier (16) connected to said AC input (10);
an inverter (18) having a plurality of switching elements (19) and connected to said rectifier (16);
an AC output (20) of the inverter (18), to which AC output at least one electrical load (22) can be connected;
a control apparatus (24) for actuating the plurality of switching elements (19) of the inverter (18);
an inrush current limiter (28) arranged between the AC input (10) and the rectifier (16); and a switching device (30) connected in parallel with the inrush current limiter (28), which switching device is switched on by the control apparatus (24) after a switch-on or start-up operation in order to bypass the inrush current limiter,
**characterized in that**
the inrush current limiter (28) has at least one PTC thermistor; and
and further **characterized by** a means (32), which is configured so that, in the case of a failure of the control apparatus (24), it switches off the switching device (30) depending on a signal (36) received by the control apparatus (24).

2. Circuit arrangement according to Claim 1,
**characterized in that**
the inrush current limiter (28) is constructed from a PTC thermistor.

3. Circuit arrangement according to Claim 1 or 2,
**characterized in that**
the switching device (30) is actuated by means of a watchdog (32), which monitors the functionality of the control apparatus (24).

4. Circuit arrangement according to one of the preceding claims,
**characterized in that**
the switching device (30) has a relay.

5. Circuit arrangement according to one of the preceding claims,
**characterized in that**
the inverter (18) is a single-phase or polyphase inverter.

## Revendications

1. Circuit de commande d'un consommateur électrique, comportant une entrée à courant alternatif (10) ;
un redresseur (16) connecté à ladite entrée à courant alternatif (10) ;
un onduleur (18) relié audit redresseur (16) et comprenant une pluralité d'éléments de commutation (19) ; une sortie à courant alternatif (20) de l'onduleur (18), à laquelle peut être connecté au moins un consommateur électrique (22) ;
un dispositif de commande (24) destiné à commander la pluralité d'éléments de commutation (19) de l'onduleur (18) ;
un limiteur de courant d'appel (28) disposé entre ladite entrée à courant alternatif (10) et ledit redresseur (16) ; et
un dispositif de commutation (30) connecté en parallèle avec le limiteur de courant d'appel (28) et qui est activé par le dispositif de commande (24) après un processus d'appel ou de démarrage afin de ponter le limiteur de courant d'appel,
**caractérisé en ce que** le limiteur de courant d'appel (28) comporte au moins une thermistance CTP ; et
et **caractérisé en outre par** un moyen (32) qui est conçu pour désactiver le dispositif de commutation (30) en réponse à un signal (36) reçu du dispositif de commande (24) en cas de dysfonctionnement du dispositif de commande (24).

2. Circuit selon la revendication 1, **caractérisé en ce que** le limiteur de courant d'appel (28) est composé d'une thermistance CTP.

3. Circuit selon la revendication 1 ou 2, **caractérisé en ce que** le dispositif de commutation (30) est commandé par l'intermédiaire d'un chien de garde (32) qui surveille le fonctionnement du dispositif de commande (24) .

4. Circuit selon l'une des revendications précédentes, **caractérisé en ce que** le dispositif de commutation (30) comporte un relais.

5. Circuit selon l'une des revendications précédentes, **caractérisé en ce que** l'onduleur (18) est un onduleur monophasé ou polyphasé.
